# DEMANDE DE BREVET EUROPEEN

(11) **EP 1 852 303 A1**
(43) Date de publication de la demande: **07.11.2007**
(21) Numéro de dépôt: 07107374.6
(22) Date de dépôt: 02.05.2007
(51) Int. Cl.: B60P 7/13, B60R 5/04

(54) **Système d'aménagement de coffre de véhicule automobile, élément coulissant et véhicule correspondants.**

(30) Priorité: 02.05.2006 FR 0603947
(71) Demandeur: WAGON SAS, 79302 Bressuire Cédex (FR)
(72) Inventeur: Neufeld, Markus, 85276, PFAFFENHOFEN (DE)
(74) Mandataire: Bioret, Ludovic

(57) **Abrégé**

L'invention concerne un système d'aménagement de coffre de véhicule automobile, comprenant au moins un élément coulissant (2), mobile en coulissement dans au moins un rail (1).

Selon l'invention, chacun des rails (1) comprend des moyens de verrouillage mobiles entre une position de verrouillage et une position de coulissement, lesdits moyens de verrouillage comprenant un ensemble de premiers éléments d'engrenage (31) venant en prise avec au moins un second élément complémentaire d'engrenage (32) formé sur chacun desdits éléments coulissants (2), de façon à immobiliser le ou lesdits éléments coulissants, lorsque ledit élément de verrouillage est dans ladite position de verrouillage.

## Description

### 1. Domaine de l'invention

Le domaine de l'invention est celui de l'aménagement intérieur des espaces de stockage, de rangement et/ou de transport de charges et d'objets, et notamment des coffres, de véhicules automobiles.

Ainsi, l'invention concerne notamment les aspects liés au rangement, à l'organisation de l'espace, au maintien et à la protection des charges. Ces aspects sont regroupés dans le secteur de l'automobile sous le terme « cargo management » (aménagement du coffre).

### 2. Art antérieur

Depuis quelques années, on observe un développement important du segment des véhicules monocorps. Ces véhicules regroupent en particulier les véhicules de type « break » et les véhicules de type « monospace », et de celui des SUV (pour « Sport Utility Vehicle » en anglais, soit « Véhicule Sport et Utilitaire »).

Parallèlement au développement commercial de ce type de véhicules, on constate un accroissement du volume des coffres dont ils sont pourvus. Ceci est également le cas de tous les véhicules, et par exemple des véhicules tricorps comme les berlines, des véhicules utilitaires...

Souvent, les charges transportées à l'intérieur du coffre d'un véhicule y sont dispersées. Il arrive donc que les objets embarqués se déplacent à l'intérieur du coffre au cours de leur transport, de façon incontrôlée. Ce phénomène entraîne la génération de bruits et de chocs ressentis par les occupants du véhicule, et peut conduire à détériorer les objets transportés, voir à endommager l'intérieur du coffre.

Les constructeurs automobiles ont parfois équipé les coffres de leurs véhicules de points d'ancrage fixes, notamment des anneaux, de manière à y faire passer des sangles et à maintenir les charges transportées.

Ces points d'ancrage n'offrent cependant aucune modularité, et ne sont la plupart du temps pas utilisés.

D'autres dispositifs permettant notamment de cloisonner l'espace intérieur d'un coffre à l'aide de parois amovibles, ou de munir le coffre de crochets coulissants dans des rails ont été proposés.

Ces techniques offrent certes une plus grande modularité, mais restent cependant relativement complexes à manipuler. Cette complexité d'usage est en particulier due au fait que les différents équipements amovibles doivent être installés puis verrouillés un par un, ce qui est long et parfois peu aisé, notamment lorsque les équipements sont éloignés du bord du coffre, et donc difficilement accessibles. Il est par exemple difficile d'atteindre un équipement placé au fond du coffre, en particulier pour les personnes de petite taille.

Ces techniques sont aussi relativement coûteuses, notamment du fait qu'elles supposent une duplication des systèmes de verrouillage solidaires de chaque équipement amovible.

### 3. Objectifs de l'invention

L'invention a notamment pour objectif de pallier ces inconvénients de l'art antérieur.

Plus précisément, un objectif de l'invention est de fournir une telle technique qui permette de faciliter le « cargo management », c'est-à-dire l'aménagement de l'espace intérieur du coffre des véhicules automobiles, et plus généralement la mise en place d'équipements mobiles dans ce coffre.

Un autre objectif de l'invention est de fournir une telle technique qui offre une grande modularité, de façon simple et efficace.

L'invention a également pour objectif la fourniture d'une telle technique qui soit ergonomique et qui soit facile tant à appréhender qu'à manipuler.

Un autre objectif de l'invention est de mettre en oeuvre une telle technique qui soit relativement simple à fabriquer et peu coûteuse.

L'invention a encore pour objectif de fournir une telle technique qui soit fiable dans le temps.

L'invention à également pour objectif de fournir une telle technique qui soit relativement peu coûteuse, en particulier en ce qui concerne le nombre de pièces et le temps de montage.

Un autre objectif de l'invention est de fournir une telle technique qui permette une installation et une désinstallation dans un véhicule simples et rapides.

### 4. Exposé de l'invention

Ces objectifs, ainsi que d'autres qui apparaîtront par la suite, sont atteints à l'aide d'un système d'aménagement de coffre de véhicule automobile, comprenant au moins un élément coulissant, mobile en coulissement dans au moins un rail.

Selon l'invention, chacun des rails comprend des moyens de verrouillage mobiles entre une position de verrouillage et une position de coulissement, les moyens de verrouillage comprenant un ensemble de premiers éléments d'engrenage venant en prise avec au moins un second élément complémentaire d'engrenage formé sur chacun des éléments coulissants, de façon à immobiliser le ou les éléments coulissants, lorsque l'élément de verrouillage est dans la position de verrouillage.

Ainsi, l'invention repose sur une approche nouvelle et inventive du verrouillage d'éléments coulissants (par exemple des crochets d'amarrage qui coulissent dans des rails montés à l'intérieur du coffre de véhicules automobiles), selon laquelle le système de verrouillage est intégré directement au niveau des rails de coulissement, par opposition aux techniques de l'art antérieur selon lesquelles, les éléments de verrouillage sont intégrés aux éléments coulissants.

En d'autres termes, les différents équipements ou dispositifs amovibles et coulissants ne comprennent pas de moyens mobiles de verrouillage, qui sont reportés dans les rails. On évite ainsi la duplication des dispositifs de verrouillage. La technique selon l'invention permet donc de fournir un système dont le nombre de pièces est réduit par rapport aux techniques de l'art antérieur et dont le coût est en conséquence plus faible.

Par ailleurs, cette approche permet de simplifier les opérations de verrouillage et de déverrouillage. Ainsi, le système de verrouillage, dont les organes d'actionnement peuvent être déportés dans une région du coffre facilement accessible par l'utilisateur, par exemple à l'entrée du coffre, comprend des éléments qui, lorsqu'ils sont en position verrouillée, coopèrent avec les éléments coulissants de sorte qu'ils soient immobilisés. La technique selon l'invention permet donc, par une simple action sur un organe d'actionnement facile d'accès, de verrouiller différents équipements coulissant sur un même rail de façon simple, efficace et simultanée.

Selon un mode de réalisation préférentiel de l'invention, l'ensemble de premiers éléments d'engrenage forme une crémaillère, et chacun des éléments coulissants comprend au moins une dent susceptible de coopérer avec la crémaillère.

On obtient ainsi de façon simple et efficace un blocage en translation de l'élément coulissant sur le rail en faisant coopérer deux formes complémentaires prévues au niveau de l'élément coulissant et de la crémaillère.

Avantageusement, un passage de la position de verrouillage à la position de coulissement, et vice-versa, est obtenu par déplacement des moyens de verrouillage selon un axe sensiblement perpendiculaire à l'axe de coulissement dans le rail.

Ainsi, le simple fait de faire coulisser les éléments de verrouillage à l'intérieur du rail permet d'obtenir le verrouillage ou le déverrouillage des éléments coulissants. Cette manipulation est simple et aisée.

De manière préférentielle, chacun des rails comprend un élément de décalage, mobile sensiblement parallèlement à l'axe de coulissement, et portant des moyens de transformation du déplacement, agissant sur les moyens de verrouillage de façon que ces derniers se déplacent perpendiculairement à l'axe de coulissement.

Selon un mode de réalisation préférentiel, les moyens de transformation comprennent une première série de plans inclinés.

De manière avantageuse, les moyens de verrouillage comprennent une seconde série de plans inclinés, complémentaire de la première série de plans inclinés.

La présence des plans inclinés complémentaires sur les moyens de verrouillage et sur les moyens de décalage permet de transformer simplement le mouvement de translation des moyens de décalage selon l'axe de coulissement du rail en un mouvement de translation des moyens de verrouillage selon un axe perpendiculaire à l'axe de coulissement du rail et ainsi d'obtenir le verrouillage ou le déverrouillage du système de façon précise.

De façon préférée, chacun des rails comprend des moyens de blocage des moyens de verrouillage dans la position de verrouillage.

Le système selon l'invention peut donc facilement être bloqué dans sa position verrouillée afin de prévenir tout déverrouillage intempestif des éléments coulissants. Ainsi, le système selon l'invention est fiable et sûr.

Selon un mode de réalisation préféré, chacun des rails comprend des moyens de commande, agissant sur les moyens de verrouillage de façon à actionner le passage de la position de verrouillage à la position de coulissement, et vice-versa.

On prévoit que ces moyens d'actionnement sont implantés dans une zone accessible du coffre de manière qu'ils soient facilement préhensibles et manipulables. Par ailleurs, la manipulation des moyens d'actionnement permet d'obtenir un verrouillage simultané des éléments coulissants sur un même rail.

Préférentiellement, les moyens de blocage et les moyens de commande sont formés par les mêmes moyens.

On obtient ainsi une architecture simple du système selon l'invention qui engendre une réduction du nombre de pièces et du coût global du système.

Avantageusement, les rails appartiennent au groupe comprenant :
- des rails s'étendant sur un plancher dudit coffre ;
- des rails s'étendant sur un bord latéral dudit coffre.

La nature des rails autorise donc une implantation multiple et selon des directions variées, ce qui confère au système selon l'invention une grande souplesse d'utilisation et une grande modularité.

L'invention concerne également un élément coulissant pour un système d'aménagement de coffre de véhicule automobile tel que décrit ci-dessus.

Avantageusement, l'élément coulissant porte et/ou coopère avec au moins un des dispositifs appartenant au groupe comprenant :
- des éléments d'accrochage et/ou de maintien d'une charge ;
- des éléments de division de l'espace dudit coffre ;
- des cache-bagages ;
- des filets de maintien.

La large gamme d'équipements pouvant être dotés d'éléments coulissants selon l'invention permet un aménagement et une gestion du volume intérieur du coffre d'un véhicule automobile aisée et variée.

L'invention concerne encore un véhicule automobile comprenant un système d'aménagement de coffre de véhicule automobile selon l'invention.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un exemple schématique de profil d'un rail selon l'invention ;
- la figure 2 illustre schématiquement un élément coulissant selon l'invention pouvant coulisser le long du rail présenté à la figure 1 ;
- les figures 3a et 3b illustrent, en coupe, le rail de la figure 1, respectivement en position déverrouillée et en position verrouillée ;
- la figure 4 illustre un exemple d'implantation de rails selon l'invention à l'intérieur d'un coffre d'un véhicule automobile ;
- la figure 5 présente (partiellement) une paroi amovible équipée d'un élément coulissant selon l'invention ;
- les figures 6a et 6b illustrent, en coupe, les rails de plancher du coffre de la figure 4, respectivement en position déverrouillée et en position verrouillée ;
- les figures 7a et 7b illustrent, en coupe, les rails de paroi latérale du coffre de la figure 4, respectivement en position déverrouillée et en position verrouillée.

### 6. Description d'un mode de réalisation de l'invention

Le principe général de l'invention repose sur l'utilisation de rails disposés à l'intérieur du coffre de véhicules automobiles dans lesquels peuvent coulisser des éléments coulissants solidaires ou coopérant avec différents équipements ou dispositifs (par exemple crochets d'amarrage, cloisons mobiles, filet de maintien, cache bagages...) permettant d'aménager l'espace intérieur des coffres. Selon l'invention, les rails comprennent des éléments de verrouillage mobiles entre une position déverrouillée et une position verrouillée dans laquelle ils coopèrent avec les éléments coulissants de manière à les immobiliser.

Ainsi, les éléments de verrouillage peuvent être actionnés facilement de façon déportée, par exemple depuis l'arrière du coffre, et permettent le verrouillage simultané de différents éléments coulissant sur un même rail.

L'invention repose donc sur une approche originale du verrouillage d'éléments coulissant dans des rails, en ce qu'elle propose d'intégrer les moyens de verrouillage des éléments coulissants directement au niveau des rails, et non au niveau des éléments coulissants eux-mêmes, comme le proposent les techniques de l'art antérieur. Elle apporte en outre une solution particulière, à titre d'exemple avantageux, de cette approche.

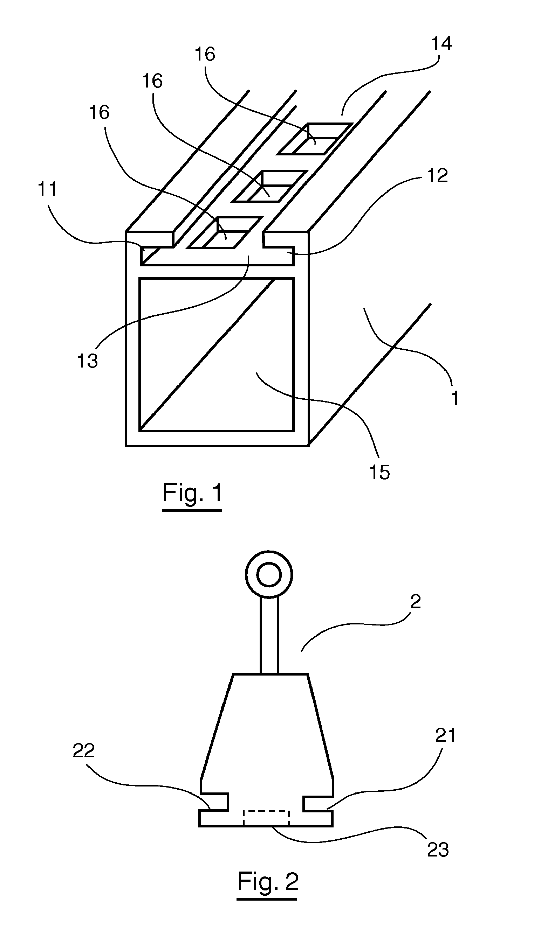

On présente, en relation avec la figure 1, la forme d'un rail 1 selon un exemple de mise en oeuvre de l'invention.

Un tel rail 1 présente un profil extérieur sensiblement rectangulaire. La face supérieure du rail 1 comprend deux portions 11 et 12 se resserrant l'une vers l'autre et s'ouvrant sur une fente 13. Les portions 11 et 12 définissent une glissière 14.

La glissière 14 permet de faire coulisser un ou plusieurs éléments coulissants. À cet effet, chaque élément coulissant, dont un exemple prenant ici la forme d'un anneau d'amarrage 2 est illustré à la figure 2, présente deux rainures 21 et 22 complémentaires des portions 11 et 12 définissant la glissière 14 de façon à pouvoir s'y inscrire et y coulisser.

Un évidement 15 constitue la partie centrale du rail 1, et communique avec la glissière 14 par l'intermédiaire d'une succession de lumières 16.

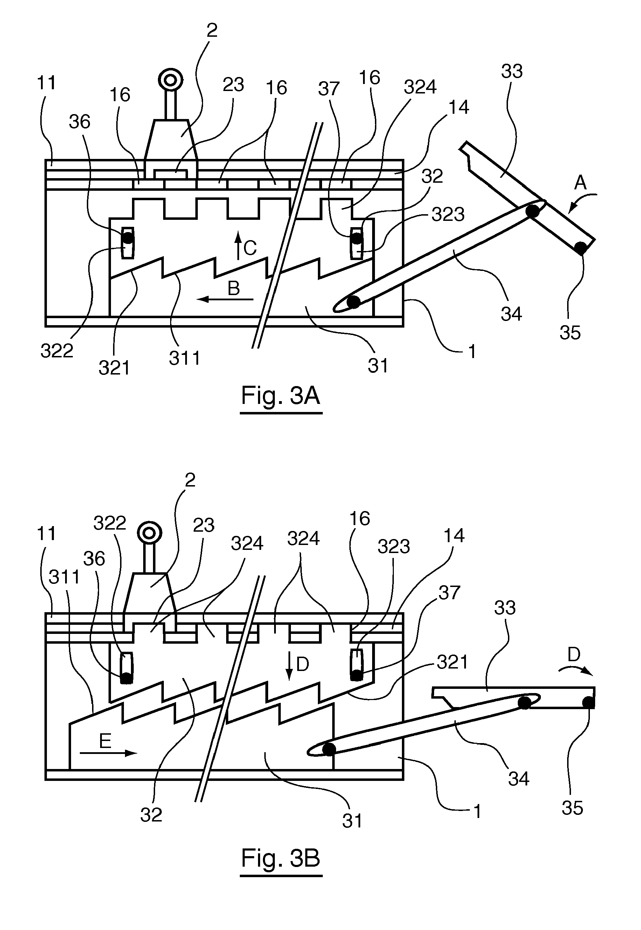

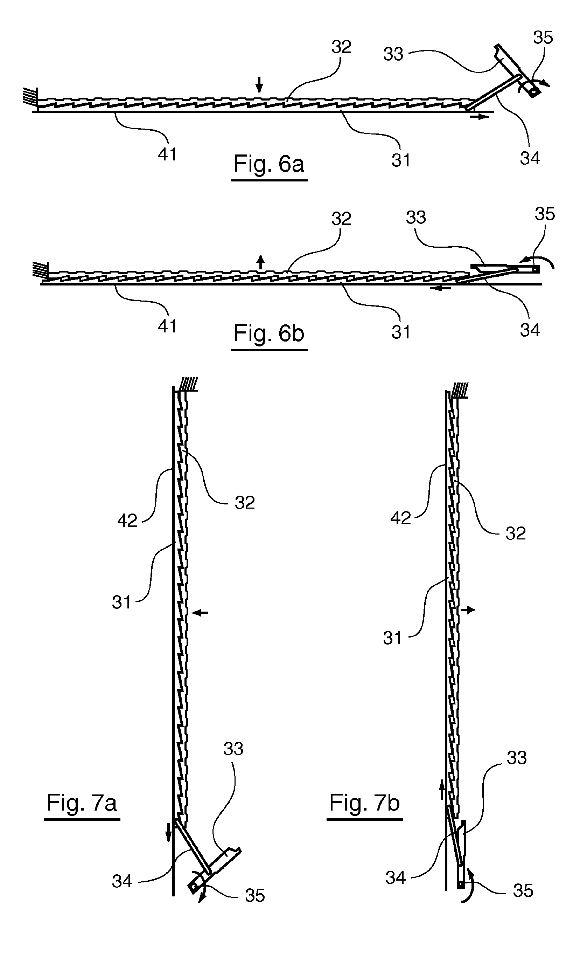

L'évidement 15 est destiné à contenir des éléments de verrouillage. De tels éléments de verrouillage sont illustrés aux figures 3a et 3b. La hauteur de cet évidement a été augmentée, pour faciliter la lecture des figures. En d'autres termes, les figures 2 et 3a, 3b ne sont pas à l'échelle (les vues des figures 6a, 6b, 7a et 7b sont, pour cet aspect, plus réalistes).

Dans le mode de réalisation préférentiel de l'invention illustré aux figures 3a et 3b, les éléments de verrouillage sont composés d'une crémaillère inférieure 31 et d'une crémaillère supérieure 32, dont deux faces, placées en regard l'une de l'autre, présentent une succession de plans inclinés 311 et 321 de forme complémentaire.

Les éléments de verrouillage peuvent prendre deux positions :
- une position verrouillée illustrée à la figure 3b dans laquelle ils coopèrent avec un ou plusieurs éléments coulissants présents sur un rail afin de le ou les maintenir en position ;
- une position déverrouillée illustrée à la figure 3a dans laquelle ils ne coopèrent pas avec le ou les éléments coulissants présents sur le rail de façon qu'ils peuvent y coulisser.

Le passage de la position déverrouillée à la position verrouillée est possible grâce au maniement d'un organe d'actionnement.

Avantageusement, l'organe d'actionnement est déporté, par exemple dans la région arrière du coffre, de façon qu'il soit facilement manipulable. Plusieurs techniques d'actionnement peuvent être envisagées (manuelles et/ou motorisées).

Dans le mode de réalisation qui est décrit, l'organe d'actionnement mis en oeuvre comprend un levier 33 et une bielle 34. Le levier 33 est mobile en rotation autour d'un axe 35 fixe. L'axe 35 est fixé par exemple à la structure du véhicule ou à un élément solidaire de celle-ci.

La bielle 34 est liée par l'une de ses extrémités au levier 33 à l'aide d'une liaison pivot d'axe perpendiculaire à l'axe longitudinal des crémaillères 31 et 32. La bielle 34 est également liée à son extrémité opposée à la crémaillère inférieure 31 au moyen d'une liaison pivot d'axe perpendiculaire à l'axe longitudinal des crémaillères 31 et 32.

Le passage de la position déverrouillée à la position verrouillée, et inversement, va maintenant être expliqué.

Le passage de la position déverrouillée à la position verrouillée se fait en poussant le levier 33 de manière à le faire tourner autour de l'axe 35 selon la flèche A. Dans ce mouvement, la bielle 34 pousse la crémaillère inférieure 31 à laquelle elle est liée. La crémaillère inférieure 31, montée de manière à ce qu'elle puisse coulisser à l'intérieur de la cavité 15 du rail 1, subit une translation suivant la flèche B.

La crémaillère supérieure 32 est fixée à l'intérieur de l'évidement 15 à l'aide de deux axes 36 et 37, qui traversent deux cavités oblongues 322, 323 dirigées vers le haut et joignant les faces latérales de la crémaillère supérieure 32, de sorte qu'elle peut uniquement être déplacée suivant les flèches C et D, mais non parallèlement au déplacement de la crémaillère inférieure.

Ainsi, lors de sa translation suivant la flèche B, la crémaillère inférieure 31 glisse sous la crémaillère supérieure 32 et, de par la présence des plans inclinés 311 et 321, entraîne la crémaillère supérieure 32 en translation suivant la flèche C.

Lorsque la crémaillère supérieure 32 est déplacée suivant la flèche C, des protubérances 324 prévues à cet effet sur sa face supérieure traversent les lumières 16 du rail 1 et débouchent dans la glissière 14 de façon à venir s'inscrire dans un logement de forme complémentaire 23 présent sur la face inférieure de l'élément coulissant 2. L'élément coulissant 2 est ainsi verrouillé et ne peut plus glisser dans la glissière 14 du rail 1.

La forme des protubérances 324 peut être étudiée pour faciliter la mise en place de l'élément 2, par exemple en présentant des plans inclinés venant le guider et le recentrer. On peut également prévoir, sur chaque élément, une série de dents, coopérant par engrenage avec des dents complémentaires formées sur la crémaillère supérieure 32.

On peut prévoir de faire coulisser plusieurs éléments coulissants 2 dans un même rail 1. Dans ce cas, leur verrouillage se fait de façon simultanée en manipulant l'organe d'actionnement.

L'organe d'actionnement composé du levier 33 et de la bielle 34 est un système connu de l'homme du métier qui est conçu de telle sorte que, lorsqu'il est dans la position verrouillée de la figure 3b, des efforts tendent à l'y bloquer, sans nécessiter d'autres éléments.

Le passage de la position verrouillée à la position déverrouillée se fait simplement en tirant le levier 33 de façon à le faire tourner autour de l'axe 35 selon la flèche D. Dans ce mouvement, la bielle 34 tire la crémaillère inférieure 31. La crémaillère inférieure 31 subit alors une translation suivant la flèche E et entraîne la crémaillère supérieure 32 en translation suivant la flèche D. Au cours de la translation suivant la flèche D, les protubérances 324 présentes à la surface de la crémaillère supérieure 32 se dégagent du logement 23 et libèrent l'élément coulissant 2 de façon qu'il puisse de nouveau coulisser.

On note que la présence d'une multitude de lumières 16 dans le rail 1 permet de nombreuses combinaisons de réglage de la position des éléments coulissants le long des rails et confère au système d'aménagement du coffre selon l'invention une grande modularité.

Le mode de verrouillage / déverrouillage décrit dans la présent mode de réalisation est de type manuel. Bien sûr, on pourra prévoir un mode de verrouillage / déverrouillage motorisé, lequel pourra par exemple permettre le verrouillage / déverrouillage de différents éléments coulissants présents sur le ou les rails disposés à l'intérieur d'un coffre de manière simultanée.

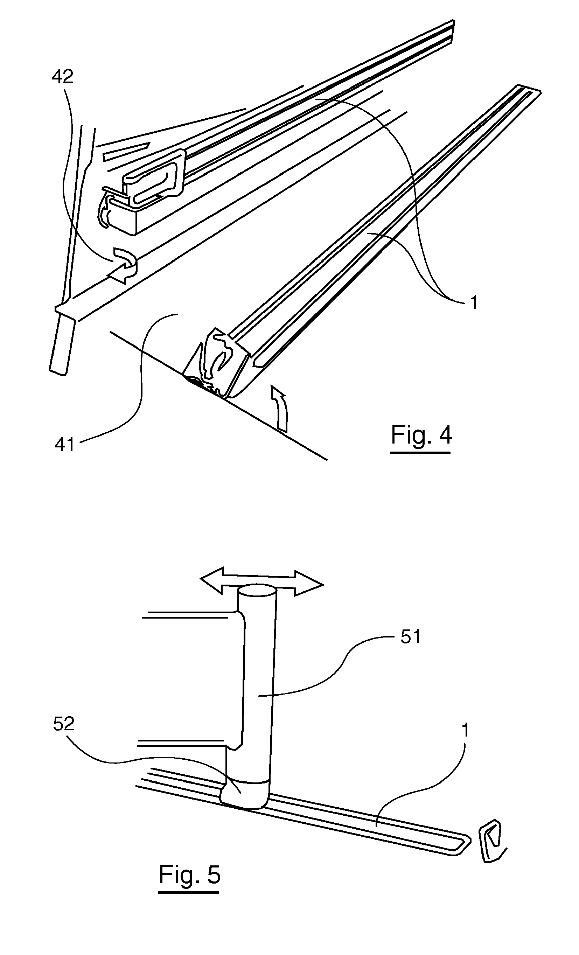

Les rails selon l'invention peuvent être disposés sur le fond 41 et/ou sur la ou les parois latérales 42 d'un coffre selon un axe parallèle à l'axe transversal d'un véhicule tel que cela est représenté à la figure 4. Ils peuvent également être agencés sur le fond du coffre perpendiculairement à l'axe transversal d'un véhicule ou encore verticalement sur la ou les parois latérales du coffre. Les rails selon l'invention peuvent encore être positionnés horizontalement et/ou verticalement sur la paroi sensiblement verticale séparant le coffre de l'habitacle.

On note sur cet exemple que les rails sont intégrés au coffre de façon à être affleurants avec le plancher et la paroi.

Les figures 6a et 6b illustrent en coupe un rail selon l'invention, disposé sur le fond 41 d'un coffre, et les figures 7a et 7b illustrent en coupe un rail selon l'invention, disposé sur la paroi latérale 42 d'un coffre. Elles ne sont pas commentées en détail, le principe de fonctionnement ayant déjà été détaillé.

L'élément coulissant mis en oeuvre dans le mode de réalisation présenté plus haut prend la forme d'un anneau d'amarrage 2. Bien entendu, les éléments coulissants selon l'invention ne se limitent pas aux seuls anneaux d'amarrage. Au contraire, une large gamme d'éléments coulissants peut être déclinée de façon à offrir une grande modularité et à faciliter l'aménagement de l'espace intérieur d'un coffre. On pourra notamment prévoir de faire coulisser des crochets permettant de suspendre toute sorte de charges. On pourra également équiper des parois amovibles 51 d'un ou plusieurs éléments coulissants 52 liés à un ou plusieurs rails 1 de façon à cloisonner le volume du coffre et à faciliter le calage des charges transportées.

Bien d'autres équipements peuvent être équipés d'éléments coulissants selon l'invention, et notamment des équipements munis de plusieurs éléments coulissants, coopérant avec un ou plusieurs rails. On prévoit par exemple que des parois de partage de l'espace du coffre, des boîtiers de rangement et des casiers soient munis d'éléments coulissants de manière à être facilement implantés et maintenus à l'intérieur d'un coffre. Le système selon l'invention peut également permettre de fixer le boîtier, ou cassette, d'un cache-bagages, et de guider et maintenir dans différentes positions une barre de tirage permettant de déployer et de reployer sa toile d'occultation.

Le système selon l'invention peut encore permettre de fixer le boîtier d'un filet de séparation entre l'habitacle et le coffre permettant de prévenir le passage d'objets depuis le coffre vers l'habitacle au cours du transport.

On note que la multiplication de l'implantation des rails dans un coffre ainsi que la déclinaison d'une large gammes d'équipements destinés au « cargo management » confère au système selon l'invention une très grande modularité et souplesse d'utilisation.

## Revendications

1. Système d'aménagement de coffre de véhicule automobile, comprenant au moins un élément coulissant (2), mobile en coulissement dans au moins un rail (1),
**caractérisé en ce que** chacun desdits rails (1) comprend des moyens de verrouillage mobiles entre une position de verrouillage et une position de coulissement, lesdits moyens de verrouillage comprenant un ensemble de premiers éléments d'engrenage venant en prise avec au moins un second élément complémentaire d'engrenage formé sur chacun desdits éléments coulissants (2), de façon à immobiliser le ou lesdits éléments coulissants, lorsque ledit élément de verrouillage est dans ladite position de verrouillage.

2. Système selon la revendication 1, **caractérisé en ce que** ledit ensemble de premiers éléments d'engrenage forme une crémaillère (31), et **en ce que** chacun desdits éléments coulissants (2) comprend au moins une dent susceptible de coopérer avec ladite crémaillère.

3. Système selon l'une quelconque des revendications 1 et 2, **caractérisé en ce qu'**un passage de ladite position de verrouillage à ladite position de coulissement, et vice-versa, est obtenu par un déplacement desdits moyens de verrouillage selon un axe sensiblement perpendiculaire à l'axe de coulissement dans ledit rail.

4. Système selon la revendication 3, **caractérisé en ce que** chacun desdits rails (1) comprend un élément de décalage, mobile sensiblement parallèlement audit axe de coulissement, et portant des moyens de transformation du déplacement, agissant sur lesdits moyens de verrouillage de façon que ces derniers se déplacent perpendiculairement audit axe de coulissement.

5. Système selon la revendication 4, **caractérisé en ce que** lesdits moyens de transformation comprennent une première série de plans inclinés (311).

6. Système selon la revendication 5, **caractérisé en ce que** lesdits moyens de verrouillage comprennent une seconde série de plans inclinés (321), complémentaire de ladite première série de plans inclinés (311).

7. Système selon l'une quelconque des revendications 1 à 6, **caractérisé en ce que** chacun desdits (1) rails comprend des moyens de blocage desdits moyens de verrouillage dans ladite position de verrouillage.

8. Système selon l'une quelconque des revendications 1 à 7, **caractérisé en ce que** chacun desdits rails (1) comprend des moyens de commande, agissant sur lesdits moyens de verrouillage de façon à actionner le passage de ladite position de verrouillage à ladite position de coulissement, et vice-versa.

9. Système selon les revendications 7 et 8, **caractérisé en ce que** lesdits moyens de blocage et lesdits moyens de commande sont formés par les mêmes moyens.

10. Système selon l'une quelconque des revendications 1 à 9, **caractérisé en ce que** lesdits rails (1) appartiennent au groupe comprenant :
- des rails s'étendant sur un plancher dudit coffre ;
- des rails s'étendant sur un bord latéral dudit coffre.

11. Elément coulissant pour système d'aménagement de coffre de véhicule automobile selon l'une quelconque des revendications 1 à 10, ledit élément coulissant (2) étant destiné à être monté et à coulisser dans un rail dudit système mobile,
**caractérisé en ce que**, chacun desdits rails comprenant des moyens de verrouillage mobiles entre une position de verrouillage et une position de coulissement, lesdits moyens de verrouillage comprenant un ensemble de premiers éléments d'engrenage,
il comprend au moins un second élément complémentaire d'engrenage venant en prise avec au moins un desdits premiers éléments d'engrenage, de façon à immobiliser le ou lesdits éléments coulissants, lorsque ledit élément de verrouillage est dans ladite position de verrouillage.

12. Elément coulissant selon la revendication 11, **caractérisé en ce qu'**il porte et/ou coopère avec au moins un des dispositifs appartenant au groupe comprenant :
- des éléments d'accrochage et/ou de maintien d'une charge ;
- des éléments de division de l'espace dudit coffre ;
- des cache-bagages ;
- des filets de maintien.

13. Véhicule automobile comprenant un système d'aménagement de coffre de véhicule automobile selon l'une quelconque des revendications 1 à 10, comprenant au moins un élément coulissant, mobile en coulissement dans au moins un rail,
**caractérisé en ce que** chacun desdits rails comprend des moyens de verrouillage mobiles entre une position de verrouillage et une position de coulissement, lesdits moyens de verrouillage comprenant un ensemble de premiers éléments d'engrenage venant en prise avec au moins un second élément complémentaire d'engrenage formé sur chacun desdits éléments coulissants, de façon à immobiliser le ou lesdits éléments coulissants, lorsque ledit élément de verrouillage est dans ladite position de verrouillage.
